# EUROPÄISCHE PATENTANMELDUNG

(11) **EP 0 958 735 A1**
(43) Veröffentlichungstag der Anmeldung: **24.11.1999**
(21) Anmeldenummer: 98109180.4
(22) Anmeldetag: 20.05.1998
(51) Int. Cl.: A01F 29/00, A01K 5/00

(54) **Mischschnecke, insbesondere Mischschnecke in einem Futtermischwagen**

(71) Anmelder: SEKO S.p.A., 35010 Curtarolo (Padova) (IT)
(72) Erfinder: Braun, Wolfgang, 58256 Ennepetal (DE)
(74) Vertreter: Gustorf, Gerhard, Dipl.-Ing.

(57) **Zusammenfassung**

Eine Mischschnecke (1), insbesondere Mischschnecke (1) in einem Futtermischwagen, ist mit einer Wendel (2) und mit im Randbereich der Wendel (2) befestigten Klingen (3) ausgestattet, wobei die Klingen (3) jeweils eine Durchbrechung (4) für ein Befestigungsmittel (6) und eine Schneide (18) aufweisen. Die Befestigungsmittel (6) sind so ausgebildet, daß die Klingen (3) im Betriebszustand der Mischschnecke (1) um das jeweilige Befestigungsmittel (6) durch im Betrieb der Mischschnecke (1) auftretende Widerstände verdrehbar sind.

## Beschreibung

Die Erfindung betrifft eine Mischschnecke, insbesondere eine Mischschnecke in einem Futtermischwagen, mit einer Wendel und mit im Randbereich der Wendel befestigten Klingen, wobei die Klingen jeweils eine Durchbrechung für ein Befestigungsmittel und eine Schneide aufweisen. Weiterhin betrifft die Erfindung ein Verfahren zum Betreiben einer derartigen Mischschnecke.

Landwirtschaftliche Futtermischwagen weisen einen Aufnahmeraum für das zu mischende Futter auf, in welchem eine oder mehrere angetriebene Mischschnecken mit Achse und Wendel vorgesehen sind. Im Bereich des freien Rands der Mischschnecke bzw. der Wendel befinden sich in regelmäßigen Abständen Löcher. Jede Klinge besitzt mindestens eine Durchbrechung, so daß sie mit einem Befestigungsmittel, in der Regel einer Schraube mit Mutter, so in den Löchern im Randbereich der Wendel befestigbar ist, daß ihre Schneide bzw. eine ihrer Schneiden über den freien Randbereich der Wendel nach außen vorsteht. Die für diesen Einsatzweck bestimmten Klingen besitzen meist mehrere Schneiden, um die Klingen mehrfach, in unterschiedlicher Relativanordnungen zu der Wendel benutzen und einsetzen zu können.

In solchen Futtermischwagen werden Futterstoffe der verschiedensten Art, beispielsweise auch Strohballen, Silage und andere, auch unterschiedliche Futtermittel, geworfen. Der Futtermischwagen hat die Aufgabe, diese Futterstoffe mit Hilfe der Klingen zu zerschneiden, also zu zerkleinern, und gleichzeitig zu vermischen. Beim Betrieb der Mischschnecke bzw. Mischschnecken in dem Futtermischwagen ergibt sich für das zu mischende Futter neben der Zerkleinerungswirkung auch eine Förderwirkung, die in erster Linie auf die Mischschnecke und deren Antrieb zurückzuführen ist.

Nach Erreichen einer gewissen Lebensdauer sind die Schneiden der Klingen stumpf, so daß die Schnittkräfte ansteigen und keine befriedigenden Schnittergebnisse mehr geliefert werden. Wenn es sich bei der Klinge um eine solche mit mehreren Schneiden handelt, wird zum Wechseln der über den freien Randbereich der Wendel nach außen vorstehenden Schneide, d. h. der Schneide, die im Eingriff steht, das Befestigungsmittel gelöst und die Klinge in eine andere Relativlage gebracht, so daß eine andere Schneide zum Einsatz kommen kann. Nachdem nun die Schneide gewechselt wurde, wird das Befestigungsmittel wieder angezogen, so daß sich die Klinge in einer definierten Lage relativ zu der Wendel befindet und die Mischschnecke wieder betrieben werden kann.

Die größten Schwierigkeiten beim Verdrehen der Klingen bestehen darin, daß hierzu in den Futtermischwagen geklettert werden muß, das heißt, daß man auf einer Vielzahl einzelner Klingen steht. Hierdurch besteht eine hohe Verletzungsgefahr. Zusätzlich sind die Befestigungsmittel fast immer korrodiert, so daß sie nicht mehr zerstörungslos gelöst werden können. Aus diesem Grunde ist das Verdrehen oder Auswechseln der Klingen im Futtermischwagen eine sehr zeitaufwendige Angelegenheit, die je nach Größe des Wagens vier bis acht Stunden dauert und zusätzlich sehr unfallträchtig ist. In der Praxis ist es nahezu unmöglich, ein Verdrehen oder Wechseln der Klingen ohne Auftreten von Schnittverletzungen durchzuführen.

Diese Problematik führt dazu, daß in der Praxis die Klingen nicht mehr gedreht, sondern in der einmal montierten Stellung weiter benutzt werden, bis der Futtermischwagen nicht mehr bestimmungsgemäß arbeitet, d. h. bis über eine sinnvolle Verschleißgrenze der Klingen hinaus. Dann werden die Befestigungsmittel der Klingen mit einer Schleifhexe o. dgl. abgetrennt. Die Klingen und Befestigungsmittel werden anschließend durch neue ersetzt. Bei dieser Arbeitsweise werden die Schneiden der Klingen, ausgehend von einer rechteckigen Klingengeometrie von vier Schneiden, nur zu etwa 25 % ihrer möglichen Lebensdauer genutzt.

Eine Mischschnecke der eingangs beschrieben Art ist aus der EP 0 612 465 A1 bekannt. Die Mischschnecke weist eine Welle mit darauf angeordneter unterteilter Wendel auf. Im Randbereich der Wendel ist eine Vielzahl von rechteckigen Klingen so angeordnet, daß die Klingen mit einer ihrer Schneiden über den freien Randbereich der Wendel nach außen vorstehen. Die Druckschrift befaßt sich nicht im einzelnen mit der Befestigung der Klingen an der Wendel.

Der Erfindung liegt die Aufgabe zugrunde, eine Mischschnecke bereitzustellen, die eine gleichmäßige Nutzung der Schneiden der Klingen ohne die Notwendigkeit aufwendiger Demontagearbeiten gewährleistet.

Erfindungsgemäß wird dies dadurch erreicht, daß die Befestigungsmittel so ausgebildet sind, daß die Klingen im Betriebszustand der Mischschnecke um das jeweilige Befestigungsmittel durch im Betrieb der Mischschnecke auftretende Widerstände verdrehbar sind.

Die Erfindung geht von dem Gedanken aus, die Klingen nicht mehr wie bisher fest und verdrehsicher auf der Wendel anzuordnen, sondern vielmehr gewollt ein Verdrehen der Klingen im Betrieb der Mischschnecke zu gestatten. Dadurch ist es nicht mehr erforderlich, die Befestigungsmittel für das Wechseln der im Eingriff stehenden Schneide zu lösen und anschließend wieder anzuziehen. Die Klingen drehen sich selbsttätig, d.h. ohne weitere Maßnahmen des Bedieners, allein durch die im Betrieb der Mischschnecke an den Klingen auftretenden Widerstände, wobei die größe des für die Verdrehung der Klingen erforderlichen Widerstands frei wählbar ist. Ohne erforderliche Demontagearbeiten wird die Schneide oder die Schneiden gleichmäßig abgenutzt.

Die Praxis zeigt, daß die im Misch-Schneidevorgang auf die Klingen einwirkenden Radialkräfte variieren. Die Größe der Kräfte schwankt in Abhängigkeit von der Festigkeit bzw. Härte des zu schneidenden Mischguts und vom Vermischungsgrad des Mischguts. So weist beispielsweise hartgefrorene Silage eine deutlich größere Festigkeit auf, als dies bei normalen Strohballen der Fall ist. Zum Zerkleinern des Mischguts muß der durch das Mischgut aufgebrachte Widerstand durch die Klingen überwunden werden. Die Befestigungsmittel sind nun vorzugsweise so ausgebildet, daß die Klingen im normalen oder durchschnittlichen Betrieb der Mischschnecke, d. h. beispielsweise beim Zerkleinern und Vermischen von Strohballen, aufgrund des geringen Schnittwiderstands keine Verdrehung relativ zu der Wendel vollführen. Somit ist ein ganz normaler Schnittvorgang ohne sich drehende Klingen möglich. Wenn nun jedoch im Betrieb höhere Widerstände, beispielsweise durch stärkere Halme, Erde oder Verklumpungen im Mischgut oder hartgefrorenes Mischgut, auftreten, führt dies zu einer Verdrehung der Klingen, die dem höheren Widerstand nachgeben. Folglich kommt nun eine andere Schneide bzw. ein anderer Teil der Schneide mit dem Mischgut in Kontakt. Solche höheren Belastungen und Widerstände treten immer wieder während des Betriebs der Mischschnecke auf, so daß eine gleichmäßige Abnutzung aller Bereiche der Schneide oder aller Schneiden resultiert.

Die Klingen können über insbesondere drei Auflager an einer ringförmig um das Befestigungsmittel verlaufenden Anlagefläche der Wendel anliegen, wobei die Auflager aus der Haupterstreckungsebene der Klingen hervorstehen. Dadurch wird erreicht, daß die Klingen lediglich mit ihren Auflagern mit der Wendel in Kontakt stehen. Idealerweise ist die Anlagefläche auf der Wendel eine Ebene, so daß die Klingen in beliebigen Winkelstellungen um das Befestigungsmittel auf der Wendel angeordnet und verdreht werden können. Auf der Wendel sind solche ebenen Flächen jedoch nicht vorhanden, so daß sie durch Fräsen erzeugt werden müßten. Da dies sehr aufwendig ist, wird vorzugsweise auf das Anbringen ebener Flächen an der Wendel verzichtet und statt dessen die Auflager auf einem kleinen Radius um das Befestigungsmittel angeordnet. Dieser Radius ist vorzugsweise kleiner als 50 % des maximalen Radius der Klingen, so daß die Unebenheit der Wendel weniger ins Gewicht fällt und annähernd ebene Verhältnisse entstehen.

Das Befestigungsmittel kann ein elastisches Element für die Aufbringung einer definierten Anpreßkraft zwischen der Klinge und der Anlagefläche aufweisen. Die Anpreßkraft stellt mit der resultierenden Reibung zwischen der Klinge und der Wendel eine Gegenkraft zu der durch das zu zerkleinernde Mischgut aufgebrachten Widerstandskraft bereit. Die Anpreßkraft kann somit so gewählt werden, daß eine Verdrehung der Klinge erst oberhalb einer bestimmten Widerstandskraft bzw. eines bestimmten Widerstandes erfolgt. Das elastische Element ist so hart auszulegen, daß ein Entfernen der Klinge von der Anlagefläche an der Wendel durch im Betrieb auftretende Kräfte vermieden wird.

Das Befestigungsmittel kann eine Bundbuchse aufweisen, die sich mit dem der Wendel zugewandten Ende des Bundes über das elastische Element an der Klinge abstützt. Die Bundbuchse kann als einfaches Dreh- oder Stanzteil ausgebildet sein. Durch Auswahl der Geometrie der Buchse und Auswahl des elastischen Elements kann die Größe der Anpreßkraft festgelegt werden. Hierbei sind zwei grundsätzliche Ausführungsformen möglich. Bei der ersten Ausführungsform liegt das eine Ende der Bundbuchse direkt an der Wendel an. Das Befestigungsmittel preßt die Bundbuchse gegen die Wendel, wobei der Abstand zwischen dem anderen Ende der Bundbuchse und der Wendel konstant ist. Bei einer zweiten Ausführungsform ist Luft zwischen dem einen Ende der Bundbuchse und der Wendel vorgesehen, so daß der Abstand zwischen dem anderen Ende der Bundbuchse und der Wendel veränderlich und die Anpreßkraft noch variabler einstellbar ist.

Das Befestigungsmittel kann eine sich durch die Durchbrechung in der Klinge erstreckende Schraube-Mutter-Verbindung oder Nietverbindung für die Befestigung der Bundbuchse an der Wendel aufweisen. Eine Schraube-Mutter-Verbindung ist daher besonders gut geeignet, da sie mit einfachen Mitteln und unter Berücksichtigung der engen räumlichen Verhältnisse in dem Futtermischwagen sehr einfach montierbar und demontierbar ist. Für eine Verdrehsicherung können übliche Maßnahmen, wie beispielsweise die Anbringung einer Kontermutter oder eines Sicherungsblechs, getroffen werden. Zusätzlich ist über die Schraube-Mutter-Verbindung eine flexible und drehmomentgesteuerte Einstellung der Anpreßkraft durchführbar. Eine Nietverbindung hat den Vorteil, daß das Nietausgangsmaterial sehr kostengünstig und die Gefahr des ungewollten Lösens der Verbindung besonders gering ist.

Das Befestigungsmittel kann eine sich durch die Durchbrechung in der Klinge erstreckende Bundschraube-Mutter-Verbindung aufweisen, wobei sich die Bundschraube mit dem der Wendel zugewandten Ende des Bundes über das elastische Element an der Klinge abstützt. Bei einer solchen Ausführungsform ist keine gesonderte Buchse erforderlich, da die Bundschraube deren Funktion mit übernimmt. Das Befestigungssmittel setzt sich somit aus besonders wenigen Einzelteilen zusammen.

Das elastische Element kann direkt zwischen der Klinge und der Wendel angeordnet sein. Die Klinge liegt nicht direkt an der Wendel, sondern indirekt über das elastische Mittel an der Wendel an. Somit kann durch das elastische Mittel eine Anpassung der Geometrien der Klinge und der Wendel aneinander erfolgen.

Das elastische Element kann eine Druckfeder oder einen Federring aufweisen. Durch Auswahl von Federquerschnitt, Steigung und Länge der Feder bzw. des Federrings können beliebige Anpreßkräfte realisiert werden. Hierfür können kostengünstige Standardnormteile verwendet werden. Es kann aber auch einer Tellerfeder, ein Elastomerring, eine Elastomerplatte oder dgl. eingesetzt werden.

Die Klinge und das Befestigungsmittel können im Bereich ihrer Berührungsflächen vergütet sein. Durch die Vergütung dieser besonders beanspruchten Flächen wird der Verschleiß herabgesetzt und somit die dauerhafte Gewährleistung der gewählten Anpreßkraft sichergestellt.

Die Klinge kann eine runde Geometrie mit einer runden Durchbrechung aufweisen. Durch die runde Außengeometrie der Klinge und entsprechende Geometrie der Schneide ist eine gleichmäßig gute Schnittwirkung der Schneide in jeder Relativlage zu der Wendel gesichert. Die runde Durchbrechung der Klinge in ihrer Mitte gewährleistet ein gleichmäßiges Verdrehen der Klinge um ihren Mittelpunkt. Die Klinge kann jedoch auch jede andere bei Klingen übliche Geometrie aufweisen. Es können auch Dreieck-, Viereck-, Vieleck- oder Segmentklingen verwendet werden. Dabei sind sowohl Ausführungsformen mit Verzahnung als auch ohne geeignet.

Das erfindungsgemäße Verfahren zum Betreiben einer Mischschnecke, insbesondere Mischschnecke in einem Futtermischwagen, mit einer Wendel und mit im Randbereich der Wendel befestigten Klingen, wobei die Klingen jeweils eine Durchbrechung für ein Befestigungsmittel und eine Schneide aufweisen, wobei die rotierende Wendel mit den Klingen das Futter im Futtermischwagen zerkleinert, ist dadurch gekennzeichnet, daß die Klingen so an der Wendel befestigt sind, daß sie sich im Betriebszustand der Mischschnecke durch im Betrieb der Mischschnecke auftretende Widerstände um das jeweilige Befestigungsmittel verdrehen können.

Die Erfindung wird anhand bevorzugter Ausführungsbeispiele weiter beschrieben. Die Zeichnungen zeigen:
- Fig. 1: eine Schnittdarstellung eines Teils einer Mischschnecke in einer ersten Ausführungsform,
- Fig. 2: eine Schnittdarstellung der Mischschnecke in einer zweiten Ausführungsform,
- Fig. 3: eine Schnittdarstellung der Mischschnecke in einer dritten Ausführungsform,
- Fig. 4: eine Draufsicht auf eine Klinge der Mischschnecke und
- Fig. 5: eine schematische Ansicht eines Futtermischwagens mit zwei Mischschnecken.

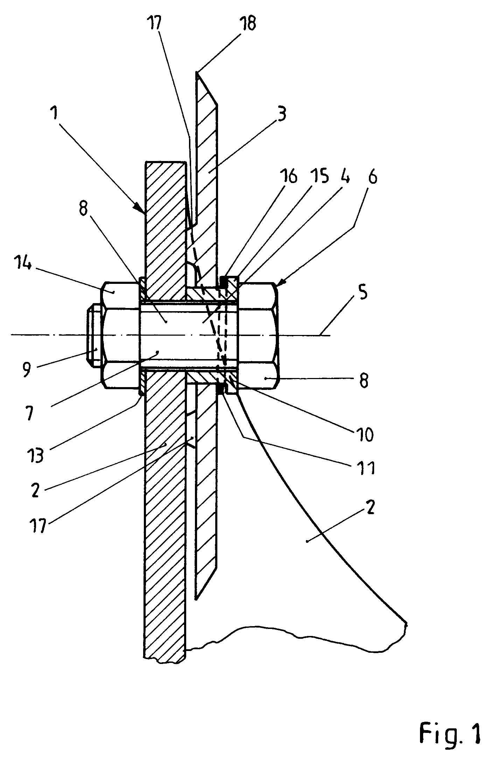

In Fig. 1 ist ein Teil einer Mischschnecke 1 mit einer Wendel 2 und mit einer im Randbereich der Wendel 2 befestigten Klinge 3 dargestellt. Die Klinge 3 weist eine Durchbrechung 4 auf, die sich konzentrisch zu einer Symmetrieachse 5 des Befestigungsmittels 6 erstreckt. Die Klinge 3 ist an der Wendel 2 mit einem Befestigungsmittel 6 befestigt. Das Befestigungsmittel 6 weist eine Schraube 7 mit Schraubenkopf 8 und Schraubenschaft 9 auf. Der Schraubenschaft 9 erstreckt sich durch eine Bundbuchse 10, ein elastisches Element 11 in Form eines Federrings 16, die Durchbrechung 4 der Klinge 3, ein Loch 12 in der Wendel 2, eine Unterlegscheibe 13 und eine Mutter 14. Dabei wird die Bundbuchse 10 zwischen dem Schraubenkopf 8 und der Wendel 2 eingespannt. Auf der anderen Seite des Bundes 15 der Bundbuchse 10 ist das elastische Element 11 so angeordnet, daß es die Klinge 3 in Richtung der Wendel 2 mit einer Kraft beaufschlagt. Dabei liegt die Klinge 3 mit Auflagern 17 an der Wendel 2 an. In der dargestellten Anordnung befindet sich der obere Teil der Schneide 18 der runden Klinge 3 in einer Position, die bei einer Rotation der Mischschnecke 1 geeignet ist, Mischgut zu zerkleinern und zu vermischen. Die durch das elastische Element 11 auf die Klinge 3 aufgebrachte Anpreßkraft ist durch Wahl des elastischen Mittels, beispielsweise des Federquerschnitts, Steigung oder Länge des Federrings 16 einstellbar. Ebenso kann durch Auswahl des Abstandes des Bundes 15 von der Klinge 3 die Anpreßkraft gewählt werden. Diese Anpreßkraft dient dazu, die Klinge 13 im normalen Betrieb der Mischschnecke 1 in einer definierten Position zu halten. Beim Auftreten größerer Widerstände während des Betriebs der Mischschnecke, beispielsweise durch relativ hartes Mischgut, wie stärkere Halme, gefrorene Silage o. dgl., wird die Klinge 3 im Betriebszustand jedoch nicht wirksam an einer Verdrehung um die Symmetrieachse 5 gehindert. Somit erfolgt im Betriebszustand eine Verdrehung der Klinge immer dann, wenn die durch das Mischgut aufgebrachte Widerstandskraft größer ist als die eingestellte Anpreßkraft. Die Verdrehung der Klinge 3 hat zur Folge, daß der im Eingriff stehende Teil der Schneide 18 relativ zu der Wendel 2 weiterbewegt wird und ein anderer Teil der Schneide 18 in Eingriff kommt. Es handelt sich demnach nicht um eine Verdrehung der Klinge 3 im Instandsetzungszustand oder bei nicht korrekt befestigtem Befestigungsmittel 6.

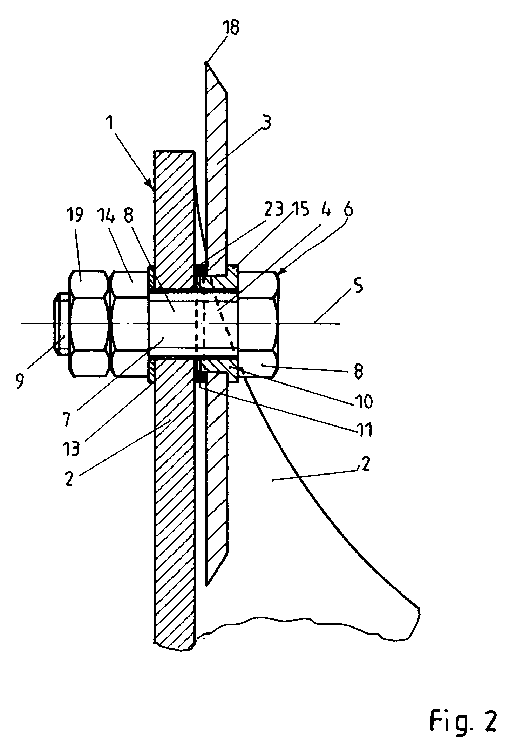

In Fig. 2 ist eine ähnliche Ausführungsform wie in Fig. 1 dargestellt, wobei im Unterschied zu Fig. 1 zwischen der Bundbuchse 10 und der Wendel 2 Luft vorhanden ist. Weiterhin ist das elastische Mittel 11 als Elastomerring 23 ausgebildet und befindet sich nicht zwischen dem Bund 15 und der Klinge 3, sondern zwischen der Klinge 3 und der Wendel 2. Neben der Mutter 14 ist eine Kontermutter 19 vorgesehen. Durch diese Anordnung kann die Bundbuchse 10 mittels Festziehen des Befestigungsmittels 6, d. h. einem Anziehen der Verbindung aus Schraube 7 und Mutter 14, eingespannt und die Anpreßkraft auf die Klinge 3 erhöht werden. Die Anpreßkraft ist somit nicht nur durch die Auswahl des elastischen Mittels 11, sondern auch durch das aufgebrachte Drehmoment an der Verbindung aus Schraube 7 und Mutter 14 definiert. In dieser Ausführungsform besitzt die Klinge 3 keine Auflager, sondern stützt sich direkt über das elastische Element 11 an der Wendel 2 ab.

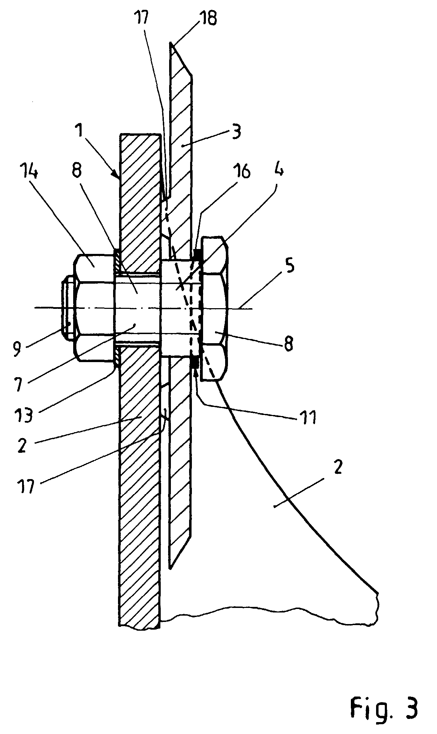

In Fig. 3 ist eine Ausführungsform der Mischschnecke 1 ohne Bundbuchse dargestellt. Bei der Schraube 7 handelt es sich um eine Bundschraube, die gleichzeitig die Funktion der Schraube 7 und der Bundbuchse aus den Fig. 2 und 3 übernimmt. Wie in Fig. 1 wird bei dieser Ausführungsform die Anpreßkraft durch Auswahl des elastischen Elements 11 bestimmt. Als zusätzliche Variabel ist der Abstand des Schraubenkopfes 8 zu der Klinge 3 festlegbar.

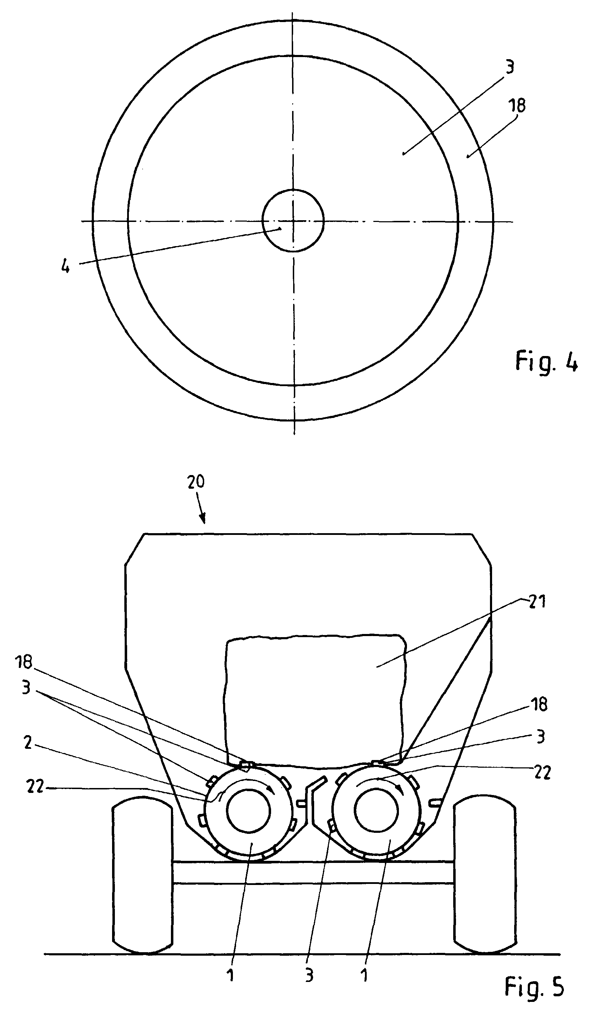

In Fig. 4 ist eine bevorzugte Ausführungsform der Klinge 3 dargestellt. Die Klinge 3 weist eine runde Außengeometrie auf, über deren äußeren Bereich sich die rundumlaufende Schneide 18 erstreckt. In der Mitte der Klinge 3 befindet sich die ebenfalls kreisrunde Durchbrechung 4. Bei dieser Ausführungsform gibt es keine bevorzugte Winkelstellung der Klinge 3 bzw. der Schneide 18, so daß in jeder Winkelstellung gleich gute Schnittergebnisse erbracht werden.

In Fig. 5 ist ein gesamter Mischwagen 20 in der Betriebsstellung schematisch dargestellt. Ein Strohballen 21 befindet sich dabei in dem Futtermischwagen 20 auf zwei Mischschnecken 1. Die Mischschnecken 1 rotieren dabei gemäß Pfeilen 22 derart, daß jeweils die im Kontakt mit den Strohballen 21 stehenden Klingen 3 mit ihrer schneide 18 Teile des Strohballens 21 abschneidet und gemäß Pfeil 22 weiterfördern. Wenn nun durch den Strohballen ein Widerstand an der Klinge 3 ansteht, der größer ist als die eingestellte Anpreßkraft, dreht sich die Klinge 3 relativ zu der Wendel 2, so daß ein anderer Teil der Schneide 18 oder eine andere Schneide 18 zum Eingriff kommt.

### BEZUGSZEICHENLISTE

- 1: - Mischschnecke
- 2: - Wendel
- 3: - Klinge
- 4: - Durchbrechung
- 5: - Symmetrieachse
- 6: - Befestigungsmittel
- 7: - Schraube
- 8: - Schaubenkopf
- 9: - Schraubenschaft
- 10: - Bundbuchse
- 11: - elastisches Element
- 12: - Loch
- 13: - Unterlegscheibe
- 14: - Mutter
- 15: - Bund
- 16: - Federring
- 17: - Auflager
- 18: - Schneide
- 19: - Kontermutter
- 20: - Futtermischwagen
- 21: - Strohballen
- 22: - Pfeil
- 23: - Elastomerring

## Patentansprüche

1. Mischschnecke (1), insbesondere Mischschnecke (1) in einem Futtermischwagen (20), mit einer Wendel (2) und mit im Randbereich der Wendel (2) befestigten Klingen (3), wobei die Klingen (3) jeweils eine Durchbrechung (4) für ein Befestigungsmittel (6) und eine Schneide (18) aufweisen, **dadurch gekennzeichnet**,
daß die Befestigungsmittel (6) so ausgebildet sind, daß die Klingen (3) im Betriebszustand der Mischschnecke (1) um das jeweilige Befestigungsmittel (6) durch im Betrieb der Mischschnecke (1) auftretende Widerstände verdrehbar sind.

2. Mischschnecke nach Anspruch 1, **dadurch gekennzeichnet**, daß die Klingen (3) über insbesondere drei Auflager (17) an einer ringförmig um das Befestigungsmittel (6) verlaufenden Anlagefläche der Wendel (2) anliegen, wobei die Auflager (17) aus der Haupterstreckungsebene der Klingen (3) hervorstehen.

3. Mischschnecke nach Anspruch 1 oder 2, **dadurch gekennzeichnet**, daß das Befestigungsmittel (6) ein elastisches Element (11) für die Aufbringung einer definierten Anpreßkraft zwischen der Klinge (3) und der Anlagefläche aufweist.

4. Mischschnecke nach Anspruch 3, **dadurch gekennzeichnet**, daß das Befestigungsmittel (6) eine Bundbuchse (10) aufweist, die sich mit dem der Wendel (2) zugewandten Ende des Bundes (15) über das elastische Element (11) an der Klinge (3) abstützt.

5. Mischschnecke nach Anspruch 4, **dadurch gekennzeichnet**, daß das Befestigungsmittel (6) eine sich durch die Durchbrechung (4) in der Klinge (3) erstreckende Schraube-Mutter-Verbindung (7, 14) oder Nietverbindung für die Befestigung der Bundbuchse (10) an der Wendel (2) aufweist.

6. Mischschnecke nach Anspruch 3, dadurch gekennzeichnet, daß das Befestigungsmittel (6) eine sich durch die Durchbrechung (4) in der Klinge (3) erstreckende Bundschraube-Mutter-Verbindung (7, 14) aufweist, wobei sich die Bundschraube (7) mit dem der Wendel (2) zugewandten Ende des Bundes (15) über das elastische Element (11) an der Klinge (3) abstützt.

7. Mischschnecke nach Anspruch 3, **dadurch gekennzeichnet**, daß das elastische Element (11) direkt zwischen der Klinge (3) und der Wendel (2) angeordnet ist.

8. Mischschnecke nach einem der Ansprüche 1 bis 6, **dadurch gekennzeichnet**, daß das elastische Element (11) eine Druckfeder oder einen Federring (16) aufweist.

9. Mischschnecke nach einem der Ansprüche 1 bis 8, **dadurch gekennzeichnet**, daß die Klinge (3) und das Befestigungsmittel (6) im Bereich ihrer Berührungsflächen vergütet sind.

10. Mischschnecke nach einem der Anspüche 1 bis 9, **dadurch gekennzeichnet**, daß die Klinge (3) eine runde Geometrie mit einer runden Durchbrechung (4) aufweist.

11. Verfahren zum Betreiben einer Mischschnecke (1), insbesondere Mischschnecke (1) in einem Futtermischwagen (20), mit einer Wendel (2) und mit im Randbereich der Wendel befestigten Klingen (3), wobei die Klingen (3) jeweils eine Durchbrechung (4) für ein Befestigungsmittel (6) und eine Schneide (18) aufweisen, wobei die rotierende Wendel (2) mit den Klingen (3) das Futter im Futtermischwagen (20) zerkleinert, **dadurch gekennzeichnet**,
daß die Klingen (3) so an der Wendel (2) befestigt sind, daß sie sich im Betriebszustand der Mischschnecke (1) durch im Betrieb der Mischschnecke (1) auftretende Widerstände um das jeweilige Befestigungsmittel (6) verdrehen.
